Europäisches Patentamt

European Patent Office

Office européen des brevets

(19)

(11) Veröffentlichungsnummer : **0 051 140**
**B1**

(12) # EUROPÄISCHE PATENTSCHRIFT

(45) Veröffentlichungstag der Patentschrift :
04.07.84

(51) Int. Cl.³ : **G 02 B   5/18**

(21) Anmeldenummer : **81107417.8**

(22) Anmeldetag : **18.09.81**

(54) **Freitragendes Gitter.**

(30) Priorität : **31.10.80 DE 3041067**

(43) Veröffentlichungstag der Anmeldung :
**12.05.82 Patentblatt 82/19**

(45) Bekanntmachung des Hinweises auf die Patenterteilung : **04.07.84 Patentblatt 84/27**

(84) Benannte Vertragsstaaten :
**AT CH FR GB IT LI NL SE**

(56) Entgegenhaltungen :
**DE-B- 1 303 738**
**OPTICAL SPECTRA, Juni 1976, G.N. STEELE: "XUV**
**Filters: Out of this World and Back Again", Seiten 37**
**bis 40**
**APPLIED OPTICS, Band 19, Nr. 10, Mai 1980, A.C.**
**BRINKMAN et al.: "Efficiency and Resolution Measu-**
**rements of X-Ray Transmission Gratings between 7,1**
**and 304 A," Seiten 1601 bis 1605**

(73) Patentinhaber : **Dr. Johannes Heidenhain GmbH**
**Nansenstrasse 17**
**D-8225 Traunreut (DE)**

(72) Erfinder : **Kraus, Heinz**
**Traunring 74 e**
**D-8225 Traunreut (DE)**

EP 0 051 140 B1

## Beschreibung

Die Erfindung betrifft ein freitragendes Gitter gemäß den Oberbegriffen der Ansprüche 1 und 2.

Derartige Gitter finden beispielsweise bei der Erforschung von extraterrestischen Strahlungsquellen (XUV- und Röntgenquellen) Verwendung und werden in entsprechenden Instrumenten mittels Raketen in orbitale Umlaufbahnen außerhalb der Erdatmosphäre gebracht. Sie müssen daher neben ihrer physikalischen Eignung auch mechanische Eigenschaften aufweisen, die mit den beim Transport auftretenden Belastungen verträglich sind.

Nun sind solche Gitter, bedingt durch ihren Verwendungszweck, äußerst filigrane Gebilde mit einer Gitterkonstanten $< 1 \mu m$. Von den insbesondere während der Startphase der Rakete auftretenden mechanischen Belastungen ist die Beanspruchung durch Schallwellen besonders gravierend. Die Gitterlamelle ist, angeregt durch periodische Luftdruckschwankungen, einer Dauerbiegebeanspruchung ausgesetzt, wobei die kleinstein Biegeradien und damit die stärkste Materialermüdung im Bereich des unsteten Übergangs von der Gitterlamelle zum starren umlaufenden Rahmen auftreten.

Aus der Druckschrift « Optical Spectra », Juni 1976, Seiten 37-40 ist es bekannt, bei homogenen Filterlamellen durch Aufbringen eines lackartig trocknenden organischen Materials mit keilförmigem Dickenverlauf an den Rändern der Filterlamelle deren mechanische Stabilität zu verbessern. Diese Methode ist aber bei den oben erwähnten Gitterlamellen nicht ohne weiteres anwendbar, weil sich infolge der Kapillarwirkung innerhalb der Gitterlamelle die Breite der Verfestigungszone nicht definiert vorbestimmen läßt und sich kein keilförmiger Lackfilm ausbildet. Zu breite Randzonen verringern aber die nutzbare Apertur der Gitterlamelle in unzulässiger Weise.

Der Erfindung liegt die Aufgabe zugrunde, bei derartigen Gittern die Biegesteifigkeit der Gitterlamelle in den Randzonen so zu modifizieren, daß bei den durch die Schallbeanspruchung unvermeidlichen Schwingungsamplituden lokal eng begrenzte Gebiete besonders starker Verformung vermieden werden und damit die Bruchgefahr herabgesetzt wird, ohne die physikalischen Eigenschaften des Gitters wesentlich zu beeinträchtigen.

Diese Aufgabe wird erfindungsgemäß durch die kennzeichnenden Merkmale der Ansprüche 1 und 2 gelöst. Die mit der Erfindung erzielten Vorteile bestehen insbesondere darin, daß die erfindungsgemäße Strukturierung der Randzonen zwischen Rahmen und Gitterlamelle keinen zusätzlichen Fertigungsaufwand darstellt, da sie bereits in der Belichtungsmaske für die photolithographische Erstellung der Gitterlamelle, des Rahmens und des Stütznetzes sowie des Stützgitters beinhaltet sein kann. Die Strukturierung der Randzonen kann der jeweiligen Beanspruchung des Gitters optimal angepaßt werden, zumal bei der serienmäßigen Herstellung derartiger freitragender Gitter die strukturierten Randzonen identisch ausfallen.

Ausführungsbeispiele der Erfindung sind in der Zeichnung dargestellt und werden im folgenden näher erläutert.

Es zeigen

Figur 1a, b ein bekanntes freitragendes Gitter im Querschnitt und in einer Draufsicht

Figur 2 und 3 eine erste Ausführungsform eines freitragendes Gitters in der Draufsicht und

Figur 4 und 5 eine weitere Ausführungsform eines freitragendes Gitters nach der Erfindung.

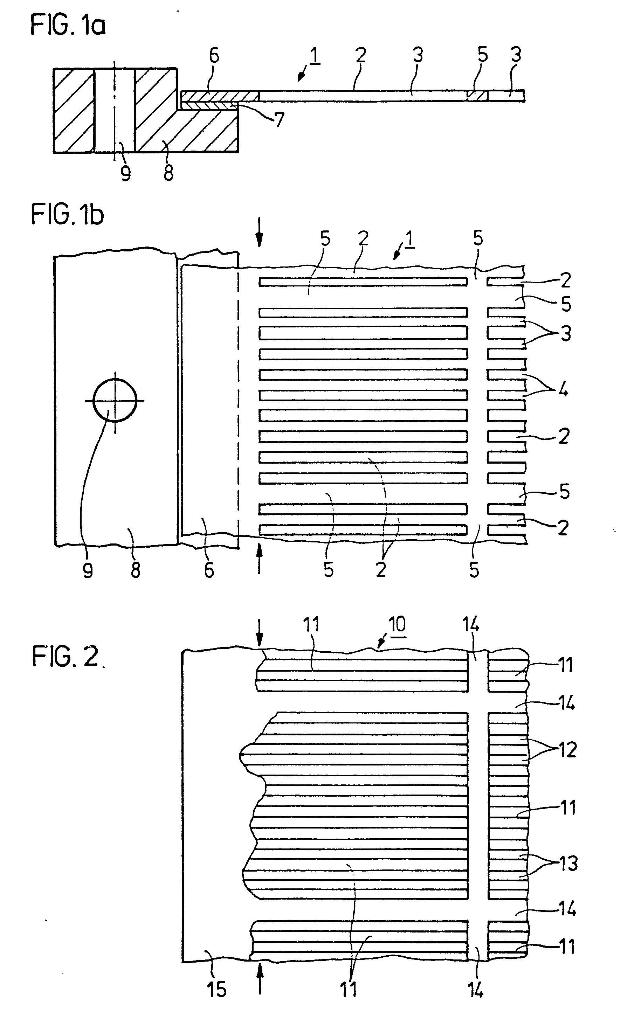

In Figur 1a, b ist ein bekanntes freitragendes Gitter 1 im Querschnitt und in der Draufsicht dargestellt, das aus einer perforierten Gitterlamelle 2 mit parallelen Stegen 3 und Ausnehmungen 4 in einem gegenüber der Gitterkonstanten des Gitters 1 großmaschigen Stütznetz 5 mit einem umlaufenden Rahmen 6 besteht. Der Rahmen 6 ist mittels einer geeigneten Klebeschicht 7 mit einer Fassung 8 verbunden, die eine Bohrung 9 zur Befestigung des Gitters 1 in einem Instrument aufweist. Der Übergangsbereich (Pfeile) zwischen Rahmen 6 und Gitterlamelle 2 bildet den Bereich mit erhöhter Bruchgefahr unter mechanischer Wechselbelastung.

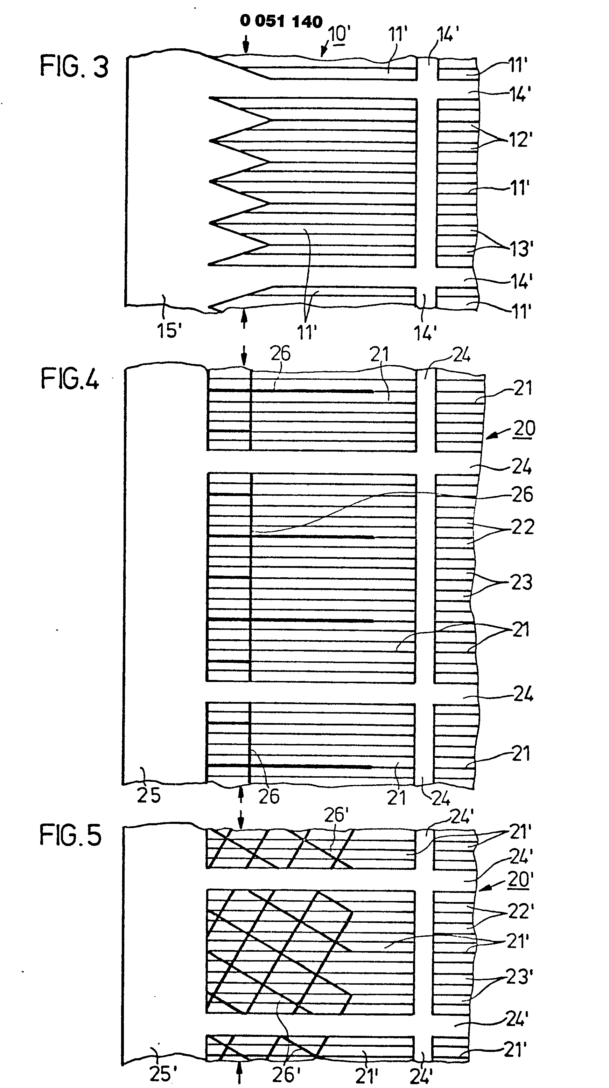

Zur Vermeidung eines derartigen Bruchs wird gemäß den Figuren 2 und 3 eine erste Ausführungsform eines freitragenden Gitters 10, 10' vorgeschlagen. Eine Gitterlamelle 11, 11' mit parallelen Stegen 12, 12' und Ausnehmungen 13, 13' (in der Zeichnung vereinfacht dargestellt) ist in einem Stütznetz 14, 14' mit einem umlaufenden Rahmen 15, 15' angeordnet. Die der Gitterlamelle 11 zugewandte Kante des Rahmens 15 gemäß Figur 2 weist eine statistische Struktur und die der Gitterlamelle 11' zugewandte Kante des Rahmens 15' eine regelmäßige Struktur auf. Dadurch wird im Übergangsbereich (Pfeile) die Bruchgefahr erheblich herabgesetzt.

Eine weitere Ausführungsform eines freitragenden Gitters 20, 20' ist in den Figuren 4 und 5 dargestellt. Eine Gitterlamelle 21, 21' mit parallelen Stegen 22, 22' und Ausnehmungen 23, 23' (in der Zeichnung vereinfacht dargestellt) ist in einem Stütznetz 24, 24' mit einem umlaufenden Rahmen 25, 25' angeordnet. Im Übergangsbereich (Pfeile) zwischen dem Rahmen 25 und der Gitterlamelle 21 befindet sich gemäß Figur 4 ein strukturiertes Stützgitter 26, dessen Dichte von der Kante des Rahmens 25 zur Gitterlamelle 21 hin abnimmt. Gemäß Figur 5 befindet sich im Übergangsbereich (Pfeile) zwischen dem Rahmen 25' und der Gitterlamelle 21' ein strukturiertes Stützgitter 26', das mit den Stegen 22' der Gitterlamelle 21' einen Winkel einschließt.

Die Gitterlamelle 11, 11', das Stütznetz 14, 14' und der Rahmen 15, 15' bzw. die Gitterlamelle 21, 21', das Stütznetz 24, 24', der Rahmen 25, 25' und das Stützgitter 26, 26' bestehen aus einem Stück vorzugsweise aus Gold.

Die Strukturierung der Kante des Rahmens und das Vorsehen eines strukturierten Stützgitters können allein oder in Kombination angewandt und an die jeweilige mechanische Beanspruchung optimal angepaßt werden. Durch eine geeignete Strukturierung können Beeinträchtigungen der Gittereigenschaften (z. B. « Geister ») vermieden werden. Die Gitter gemäß den Figuren 2-5 können ebenfalls in nicht gezeigter Weise mit einer Fassung versehen sein.

Die Erfindung ist nicht auf die angeführten Ausführungsbeispiele beschränkt.

**Ansprüche**

1. Freitragendes Gitter, insbesondere optisches Beugungsgitter für den kurzwelligen Bereich des elektromagnetischen Spektrums (XUV- und Röntgenstrahlung), aus einer perforierten Gitterlamelle, die von einem gegenüber der Gitterkonstanten des Gitters großmaschigen Stütznetz mit einem umlaufenden Rahmen getragen wird, dadurch gekennzeichnet, daß die der Gitterlamelle (11, 11') zugewandte Kante des Rahmens (15, 15') eine Struktur aufweist (Fig. 2, 3).

2. Freitragendes Gitter, insbesondere optisches Beugungsgitter für den kurzwelligen Bereich des elektromagnetischen Spektrums (XUV- und Röntgenstrahlung), aus einer perforierten Gitterlamelle, die von einem gegenüber der Gitterkonstanten des Gitters großmaschigen Stütznetz mit einem umlaufenden Rahmen getragen wird, dadurch gekennzeichnet, daß sich im Übergangsbereich zwischen dem Rahmen (25, 25') und der Gitterlamelle (21, 21') ein strukturiertes Stützgitter (26, 26') befindet (Fig. 4, 5).

3. Freitragendes Gitter nach Anspruch 1, dadurch gekennzeichnet, daß die Kante des Rahmens (15) eine statistische Struktur aufweist.

4. Freitragendes Gitter nach Anspruch 1, dadurch gekennzeichnet, daß die Kante des Rahmens (15') eine regelmäßige Struktur aufweist.

5. Freitragendes Gitter nach Anspruch 2, dadurch gekennzeichnet, daß die Dichte des strukturierten Stützgitters (26) von der Kante des Rahmens (25) zur Gitterlamelle (21) hin abnimmt.

6. Freitragendes Gitter nach Anspruch 2, dadurch gekennzeichnet, daß das strukturierte Stützgitter (26') mit der Teilung der Gitterlamelle (21') einen Winkel einschließt.

7. Freitragendes Gitter nach Anspruch 1, dadurch gekennzeichnet, daß die Gitterlamelle (11, 11'), das Stütznetz (14, 14') und der Rahmen (15, 15') aus einem Stück bestehen.

8. Freitragendes Gitter nach Anspruch 7, dadurch gekennzeichnet, daß die Gitterlamelle (11, 11'), das Stütznetz (14, 14') und der Rahmen (15, 15') aus Gold bestehen.

9. Freitragendes Gitter nach Anspruch 2, dadurch gekennzeichnet, daß die Gitterlamelle (21, 21'), das Stütznetz (24, 24'), der Rahmen (25, 25') und das Stützgitter (26, 26') aus einem Stück bestehen.

10. Freitragendes Gitter nach Anspruch 9, dadurch gekennzeichnet, daß die Gitterlamelle (21, 21'), das Stütznetz (24, 24'), der Rahmen (25, 25') und das Stützgitter (26, 26') aus Gold bestehen.

**Claims**

1. Unsupported grating, in particular an optical diffraction grating for the short-wave religion of the electromagnetic spectrum (XUV and X radiation), this grating being composed of a perforated grating-leaf which is carried by a supporting grid possessing a peripheral frame, the apertures of this supporting grid being large in relation to the grating constants of the grating, characterised in that a structure (Figures 2 and 3) is exhibited by that edge of the frame (15, 15') which faces the grating-leaf (11, 11').

2. Unsupported grating, in particular an optical diffraction grating for the short-wave region of the electromagnetic spectrum (XUV and X radiation), this grating being composed of a perforated grating-leaf which is carried by a supporting grid possessing a peripheral frame, the apertures of this supporting grid being large in relation to the grating constants of the grating, characterised in that a structured supporting grating (26, 26') is present in the transition zone between the frame (25, 25') and the grating-leaf (21, 21') (Figures 4 and 5).

3. Unsupported grating according to Claim 1, characterised in that the edge of the frame (15) exhibits a random structure.

4. Unsupported grating according to Claim 1, characterised in that the edge of the frame (15') exhibits a regular structure.

5. Unsupported grating according to Claim 2, characterised in that the density of the structured supporting grating (26) decreases in the direction from the edge of the frame (25) towards the grating-leaf (21).

6. Unsupported grating according to Claim 2, characterised in that the structured supporting grating (26') is arranged at an angle to the ruling of the grating-leaf (21').

7. Unsupported grating according to Claim 1, characterised in that the grating-leaf (11, 11'), the supporting grid (14, 14'), and the frame (15, 15') are composed of a single piece.

8. Unsupported grating according to Claim 7, characterised in that the grating-leaf (11, 11'), the supporting grid (14, 14'), and the frame (15, 15') are composed of gold.

9. Unsupported grating according to Claim 2, characterised in that the grating-leaf (21, 21'), the supporting grid (24, 24'), the frame (25, 25'), and the supporting grating (26, 26') are composed of a single piece.

10. Unsupported grating according to Claim 9, characterised in that the grating-leaf (21, 21'), the supporting grid (24, 24'), the frame (25, 25'), and the supporting grating (26, 26') are composed of gold.

**Revendications**

1. Grille en porte-à-faux, notamment grille à diffraction optique pour la zone d'ondes courtes du spectre électromagnétique (rayons ultraviolets lointains et X), faite d'une lame de grille perforée qui est portée par un réseau de soutien à mailles larges par rapport à la constante de la grille avec un cadre périphérique, caractérisée par le fait que l'arête du cadre (15, 15') tournée vers la lame de grille (11, 11') comporte une structure (figures 2, 3).

2. Grille en porte-à-faux, notamment grille à diffraction optique pour la zone d'ondes courtes du spectre électromagnétique (rayons ultraviolets lointains et X), faite d'une lame de grille perforée qui est portée par un réseau de soutien à mailles larges par rapport à la constante de la grille avec un cadre périphérique, caractérisée par le fait que dans la zone de transition entre le cadre (25, 25') et la lame de grille (21, 21') se trouve un grillage de soutien structuré (26, 26') (figures 4, 5).

3. Grille en porte-à-faux selon la revendication 1 caractérisée par le fait que l'arête du cadre (15) comporte une structure statistique.

4. Grille en porte-à-faux selon la revendication 1 caractérisée par le fait que l'arête du cadre (15') comporte une structure régulière.

5. Grille en porte-à-faux selon la revendication 2 caractérisée par le fait que la densité du grillage de soutien structuré (26) va en diminuant de l'arête du cadre (25) à la lame de grille (21).

6. Grille en porte-à-faux selon la revendication 2 caractérisée par le fait que le grillage de soutien structuré (26') forme un angle avec la division de la lame de grille (21').

7. Grille en porte-à-faux selon la revendication 1 caractérisée par le fait que la lame de grille (11, 11'), le réseau de soutien (14, 14') et le cadre (15, 15') forment une seule pièce.

8. Grille en porte-à-faux selon la revendication 7 caractérisée par le fait que la lame de grille (11, 11'), le réseau de soutien (14, 14') et le cadre (15, 15') sont en or.

9. Grille en porte-à-faux selon la revendication 2 caractérisée par le fait que la lame de grille (21, 21'), le réseau de soutien (24, 24'), le cadre (25, 25') et le grillage de soutien (26, 26') forment une seule pièce.

10. Grille en porte-à-faux selon la revendication 9 caractérisée par le fait que la lame de grille (21, 21'), le réseau de soutien (24, 24'), le cadre (25, 25') et le grillage de soutien (26, 26') sont en or.

FIG. 1a

FIG. 1b

FIG. 2.

1

FIG. 3

FIG. 4

FIG. 5